# EUROPEAN PATENT SPECIFICATION

(11) **EP 0 840 974 B1**
(45) Date of publication and mention of the grant of the patent: **01.09.2004**
(21) Application number: 96923442.6
(22) Date of filing: 26.06.1996
(51) Int. Cl.: H04M 1/64, H04M 15/06, H04M 3/42, H04M 3/00, H04M 3/48, H04M 3/50

(54) **METHOD FOR RETURNING INBOUND CALLS**
RÜCKRUFVERFAHREN FÜR EINGEHENDE ANRUFE
PROCEDE DE RAPPEL AUTOMATIQUE D'APPELS ENTRANTS

(30) Priority: 26.06.1995 US 494519
(43) Date of publication of application: 13.05.1998
(73) Proprietor: Virtual Hold Technology, LLC, Akron, Ohio 44321 (US)
(72) Inventor: WILLIAMS, Mark, J., Cuyahoga Falls, OH 44221 (US)
(74) Representative: Frankland, Nigel Howard
(86) International application number: PCT/US1996/010894
(87) International publication number: WO 1997/001917

(56) References cited:
- US-A- 4 805 209
- US-A- 4 924 491
- US-A- 5 040 208
- US-A- 5 155 761
- US-A- 5 181 236
- US-A- 5 185 782
- US-A- 5 185 786
- US-A- 5 283 824
- US-A- 5 502 761

## Description

### BACKGROUND OF THE INVENTION

This invention relates to inbound telephone call processing and, in particular, to a method for automatic callback.

Many organizations have large volumes of inbound telephone calls directed to a limited group of agents. Examples include reservation clerks, dial-up technical support, customer service representatives, mail-order catalog clerks, etc.

The number of such agents used is typically related to the average number needed to handle the load. Unfortunately, individual calls do not come at the average rate, nor last only the average time. This results in inbound calls being put on hold for significant periods of time.

In the case of inbound area code 800 or WATS calls, this hold time is a direct expense to the organization. It is estimated that about 35 percent of 800 number charges are for hold time. This represents billions of dollars a year in extra expense to the organizations that subscribe to 800 service. Furthermore, hold time requires extra inbound lines for not only those using 800 numbers, but also for those using conventional long distance and local inbound numbers.

Much of this expense could be saved if hold time could be eliminated or reduced without resorting to hiring agents on the basis of peak demand instead of average demand.

One way of eliminating hold time is not to permit it. Unfortunately, most customers dislike busy signals even more than they dislike being on hold.

Various proposals have been made concerning arrangements which automatically return telephone calls.

U.S. 5,181,236A discloses an automatic call distributor system for selectively switching incoming calls from callers to a group of agent stations. The system has an arrangement for recording a message from a caller in the event that no agent is available.

In the arrangements specifically disclosed in the Specification, should there be no agent available a caller receives a pre-recorded message inviting the caller to leave a voice message to be recorded including the caller's telephone number. The caller's number may be conveyed orally, but preferably it is conveyed via a touch-tone key-paid entry from the caller's telephone set. The number may be provided by an automatic number identification feature of the telephone switching network. The messages are stored in the queue and then automatically provided to an agent station as it becomes available.

U.S. 5,155,761A discloses a further automatic callback system. In the arrangement disclosed when no agent is available an incoming call is connected to a robot controller. The robot controller informs the caller when a callback to the caller can be made. The callback time can be suggested by the robot controller or the controller can request a specific callback time. The robot controller can automatically ascertain the callback number or can ascertain the callback number by interrogation of the caller.

The present invention seeks to provide an improved method for electronically processing a holding inbound telephone call and also seeks to provide an improved call processing system.

According to one aspect of this invention there is provided a method for electronically processing a holding inbound telephone call placed by a caller having a telephone number and a name, said method comprising the steps of
determining caller information, said step of determining caller information including:
determining said caller telephone number;
prompting said caller for said caller name and recording said caller name;
prompting said caller for an indication of no extension, a machine dialable extension, or a verbal extension and recording said indication and said machine dialable extension or said verbal extension, if any;
entering said caller information in a callback queue;
disconnecting said inbound telephone call;
subsequently placing a callback call to said caller using said caller information from said callback queue, said step of using said caller information including;
if no extension is indicated, dialling said caller telephone number and audibly addressing said caller by said caller name;
if a machine dialable extension is indicated, dialling said caller telephone number and machine dialable extension and audibly addressing said caller by said caller name; and
if a verbal extension is indicated, dialling said caller telephone number, audibly requesting said verbal extension and audibly addressing said caller by said caller name; and
connecting a free agent to said caller.

Preferably said step of determining caller information includes transmitting an automatic number identification telephone number by speech to said caller for verification and if said automatic number identification number is not accepted by the caller, using a caller supplied telephone number as said caller telephone number.

Conveniently said connecting to an agent is made to occur at a time when said agent would have been connected had the inbound call not been disconnected.

According to another aspect of this invention there is provided a call processing system for electronically processing a holding inbound telephone call placed by a caller having a telephone number and a name, said system comprising a central processor unit, the central processor unit being associated with a DTMF decoder, a voice synthesiser and an A/D converter connected by a switch to incoming telephone lines adapted to determine caller information by means for
determining said caller telephone number; means for
prompting said caller for said caller name and recording said caller name; means for
prompting said caller for an indication of "no extension", a machine dialable extension, or a verbal extension and recording said indication and said machine dialable extension or said verbal extension, if any;
said central processor unit being configured to enter said caller information in a callback queue and to disconnect said inbound telephone call;
the central processor unit also being associated with a DTMF coder, a voice synthesiser, and a D/A converter configured to use said caller information from said callback queue to place a callback to said caller through a switch connected to outbound lines by either:
means for dialling said caller telephone number and audibly addressing said caller by a said caller name if no extension is indicated, or
means for dialling said caller telephone number and machine dialable extension and audibly addressing said caller by said caller name if a machine dialable extension is indicated, or
means for dialling said caller telephone number and audibly requesting said verbal extension and audibly addressing said caller by said caller name if a verbal extension is indicated;
said central processor unit also being configured to connect a free agent to the caller.

In a preferred system the central processor is configured to cause the voice synthesiser to transmit an automatic number identification telephone number by speech to said caller for verification and if said automatic number identification number is not accepted by the caller, to record a caller supplied telephone number as said caller telephone number.

It is envisaged that use of preferred embodiments of the invention will reduce an organisation's hold time expense and permits the use of fewer inbound lines. In addition, more business may be conducted on cheaper conventional long distance and local outbound lines. Furthermore, it is possible to assure customers that they will be serviced at the same time they would have been helped had they sat unproductively on hold.

In order that the invention may be more readily understood, the invention will now be described by way of example with reference to the accompanying drawings in which:
FIGURE 1 is a block diagram of a call processing system suitable for using a method according to the invention,
FIGURE 2 is a flow chart diagram of a method or electronically processing a call according to the invention,
FIGURE 3 is a flow chart diagram further illustrating a caller information determining method according to the invention, and
FIGURE 4 is a flow chart diagram further illustrating a callback method using the caller information according to the invention.

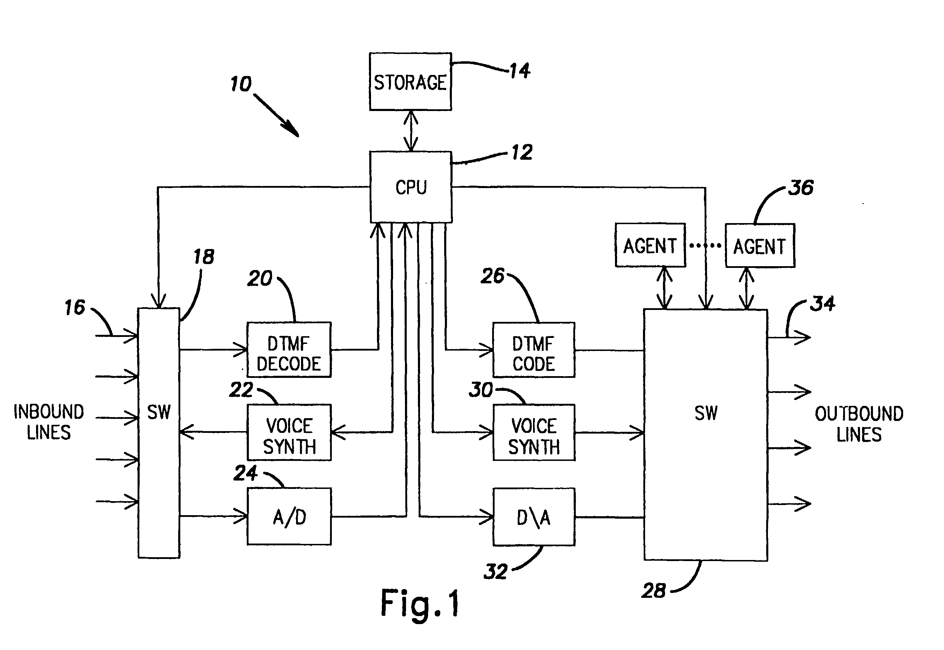

Referring to Figure 1, a call processing system includes a CPU with storage. The CPU and storage may be, for example, a microprocessor-based personal computer with RAM and a disk drive. Inbound phone lines are connected to a selector switch controlled by the CPU. A DTMF decoder decodes DTMF codes from the switch to digital format for the CPU. A voice synthesiser provides audible speech to the switch in response to the CPU. An A/D converter provides digitised audio from the switch to the CPU. The switch selects which of the inbound lines is connected to the DTMF decoder, the voice synthesiser and the A/D converter.

A DTMF coder encodes DTMF codes from digital signals from the CPU for a selector switch. A voice synthesiser, provides audible speech to the switch 28 in response to the CPU 12. A D/A converter 32 provides analog audio to the switch 28 in response to the CPU 12. The switch 28 selects which of the outbound lines 34 is connected to the DTMF coder 26, the voice synthesizer 30, the D/A converter 32 and the call-handling agents 36. The switch 28 operates in response to the CPU 12.

The system 10 may also advantageously include voice recognition capability to avoid some or all situations requiring the caller to push telephone push buttons in response to directions from the system 10.

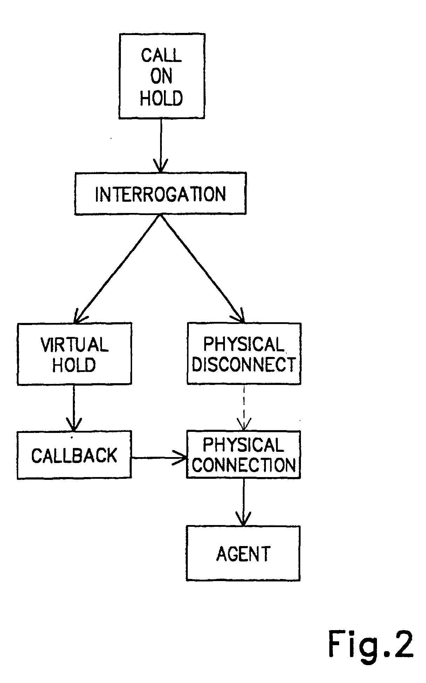

Referring to FIG. 2, a call on hold is interrogated by the system 10 to determine the caller information necessary to reestablish the call. The call is then physically disconnected, but placed in a "virtual hold" status. The caller information is placed in a callback queue. When an agent is going to be available to take the call, a callback is initiated by taking the caller information from the callback queue. This reestablishes the physical connection. The call is then transferred to the agent.

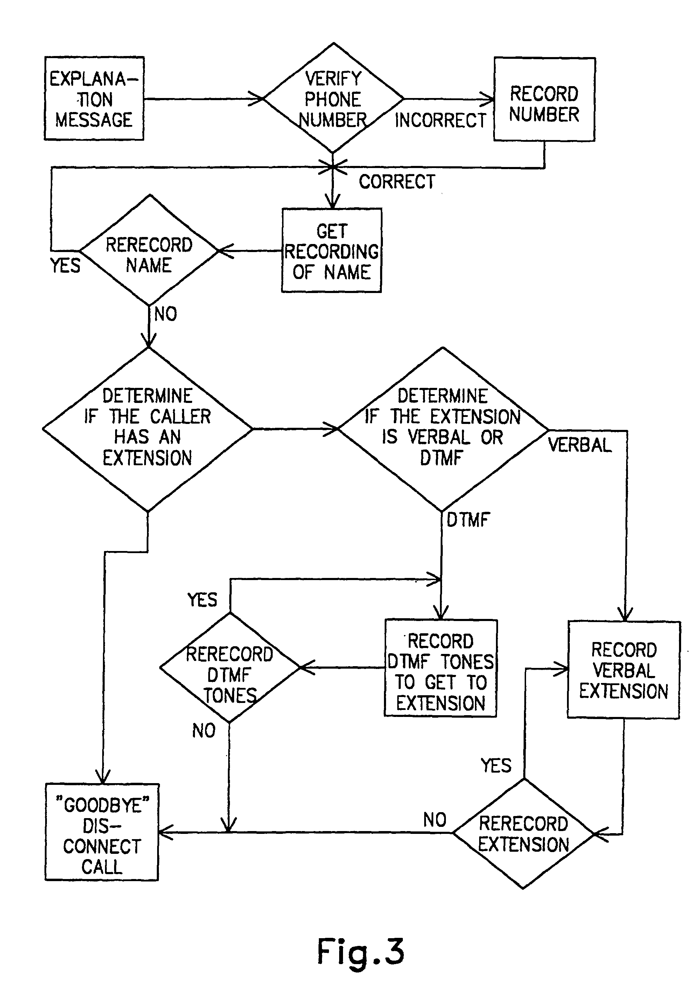

Referring to FIG. 3, the caller interrogation process starts with an explanatory message to the caller. If the system has a potential caller phone number, for example, from an automatic number identification system, the number is synthesized to the caller for acceptance. If the system has no calling number, or an unacceptable number, the caller dials the correct number, which is recorded by the system.

The system then prompts the caller to speak his or her name, which is also recorded.

The caller is then prompted to indicate if he or she has an extension number. The caller may, for example, indicate yes or no with telephone keypad entries or verbally in combination with voice recognition.

If the caller indicates no extension, the call is disconnected and placed on "virtual hold." If the caller dials a DTMF extension, these machine dialable codes are recorded and the call is disconnected and placed on "virtual hold." If the caller speaks a verbal extension, the caller's words are recorded and the call is disconnected and placed on "virtual hold."

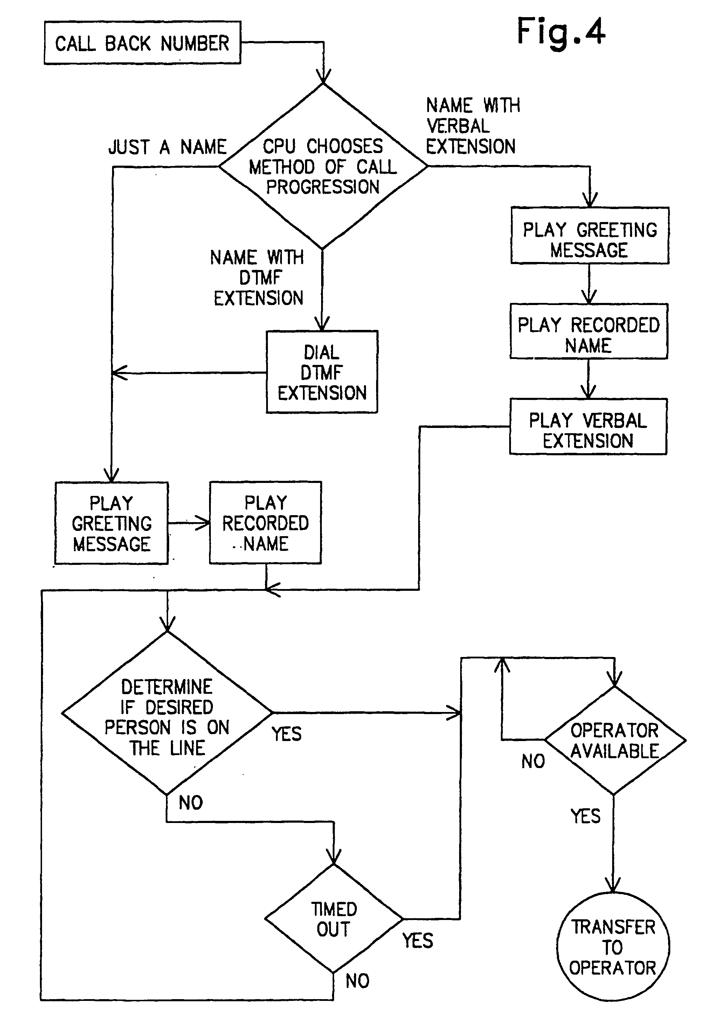

Referring to FIG. 4, the callback process starts when an agent appears to be about to become available. In the preferred embodiment the callback process starts when the "virtual hold" corresponds in time with the time the caller would have spent on actual hold. This may be accomplished, for example, by taking all calls in order from only the callback queue unless it is empty.

The system reads the caller information from the callback queue and calls the caller number.

If no extension has been indicated, the system plays a greeting message and the caller name. The call is then transferred to the next free agent.

If a DTMF extension has been indicated, the system dials the DTMF extension and proceeds as above.

If a verbal extension has been indicated, an explanatory message is played, along with the calling name and verbal extension in order to request the verbal extension. After a delay, the greeting message and caller name are played. The call is then transferred to the next free agent.

With this invention, organizations can greatly reduce the amount of expensive, unproductive, 800 number hold time they are forced to pay for. In addition, the callbacks can be made using more economical conventional long distance calls or, in some cases, even local calls. Also, reducing customers on hold frees up lines, thereby lowering the number of lines required.

Customers are also relieved from having to sit on hold to keep their place in the queue. This allows customers to be more productive.

It should be evident that this disclosure is by way of example and that various changes may be made by adding, modifying or eliminating details without departing from the fair scope of the teaching contained in this disclosure. The invention is therefore not limited to particular details of this disclosure except to the extent that the following claims are necessarily so limited.

## Claims

1. A method for electronically processing a holding inbound telephone call placed by a caller having a telephone number and a name, said method comprising the steps of
determining caller information, said step of determining caller information including:
determining said caller telephone number;
prompting said caller for said caller name and recording said caller name;
prompting said caller for an indication of no extension, a machine dialable extension, or a verbal extension and recording said indication and said machine dialable extension or said verbal extension, if any;
entering said caller information in a callback queue;
disconnecting said inbound telephone call;
subsequently placing a callback call to said caller using said caller information from said callback queue, said step of using said caller information including;
if no extension is indicated, dialling said caller telephone number and audibly addressing said caller by said caller name;
if a machine dialable extension is indicated, dialling said caller telephone number and machine dialable extension and audibly addressing said caller by said caller name; and
if a verbal extension is indicated, dialling said caller telephone number, audibly requesting said verbal extension and audibly addressing said caller by said caller name; and
connecting a free agent to said caller.

2. A method according to Claim 1 wherein said step of determining caller information includes transmitting an automatic number identification telephone number by speech to said caller for verification and if said automatic number identification number is not accepted by the caller, using a caller supplied telephone number as said caller telephone number.

3. A method according to Claim 1 or 2 wherein said connecting to an agent is made to occur at a time when said agent would have been connected had the inbound call not been disconnected.

4. A call processing system (10) for electronically processing a holding inbound telephone call placed by a caller having a telephone number and a name, said system comprising a central processor unit (12), the central processor unit (12) being associated with a DTMF decoder (20), a voice synthesiser (22) and an A/D converter (24) connected by a switch (18) to incoming telephone lines (16) adapted to determine caller information by
means for determining said caller telephone number;
means for prompting said caller for said caller name and recording said caller name;
means for prompting said caller for an indication of "no extension", a machine dialable extension, or a verbal extension and recording said indication and said machine dialable extension or said verbal extension, if any;
said central processor unit (12) being configured to enter said caller information in a callback queue and to disconnect said inbound telephone call;
the central processor unit (12) also being associated with a DTMF coder (26), a voice synthesiser (30), and a D/A converter (32) configured to use said caller information from said callback queue to place a callback to said caller through a switch (28) connected to outbound lines (34) by either:
means for dialling said caller telephone number and audibly addressing said caller by a said caller name if no extension is indicated, or
means for dialling said caller telephone number and machine dialable extension and audibly addressing said caller by said caller name if a machine dialable extension is indicated, or
means for dialling said caller telephone number and audibly requesting said verbal extension and audibly addressing said caller by said caller name if a verbal extension is indicated;
said central processor unit (12) also being configured to connect a free agent to the caller.

5. A system according to Claim 4 wherein the central processor (12) is configured to cause the voice synthesiser (22) to transmit an automatic number identification telephone number by speech to said caller for verification and if said automatic number identification number is not accepted by the caller, to record a caller supplied telephone number as said caller telephone number.

## Patentansprüche

1. Verfahren zum elektronischen Verarbeiten eines gehaltenen eingehenden Telefonanrufs von einem Anrufer, der eine Telefonnummer und einen Namen hat, wobei das Verfahren die folgenden Schritte umfaßt:
- Bestimmen einer Anruferinformation, wobei der Schritt zum Bestimmen der Anruferinformation die folgenden Schritte umfaßt:
- Bestimmen der Anrufertelefonnummer;
- Anfordern des Anrufemamens von dem Anrufer und Aufzeichnen des Anrufernamens;
- Anfordern eines Hinweises auf keinen Nebenanschluß, einen maschinenwählbaren Nebenanschluß oder einen verbalen Nebenanschluß, und Aufzeichnen des Hinweises sowie des maschinenwählbaren Nebenanschlusses oder des verbalen Nebenanschlusses, sofern diese vorliegen;
- Eingeben der Anruferinformation in eine Rückruf-Warteschlange;
- Trennen des eingehenden Telefonanrufs;
- nachfolgendes Plazieren eines Rückrufanrufs des Anrufers, wobei die Anruferinformation aus der Rückruf-Warteschlange genutzt wird, wobei der Schritt zum Nutzen der Anruferinformation die folgenden Merkmale umfaßt:
- Wählen der Anrufertelefonnummer und hörbares Ansprechen des Anrufers mit dem Anrufernamen, wenn auf keinen Nebenanschluß hingewiesen wurde;
- Wählen der Anrufertelefonnummer sowie des maschinenwählbaren Nebenanschlusses und hörbares Ansprechen des Anrufers mit dem Anrufemamen, wenn auf den maschinenwählbaren Nebenanschluß hingewiesen wurde; und
- Wählen der Anrufertelefonnummer, hörbares Anfordern des verbalen Nebenanschlusses und hörbares Ansprechen des Anrufers mit dem Anrufernamen, wenn auf den verbalen Nebenanschluß hingewiesen wurde; und
- Verbinden eines freien Agenten mit dem Anrufer.

2. Verfahren nach Anspruch 1, **dadurch gekennzeichnet, daß** der Schritt zum Bestimmen der Anruferinformation das Übertragen einer automatischen Telefonnummer-Nummeridentifikation mittels Sprache an den Anrufer zum Verifizieren und das Nutzen einer an den Anrufer gegebenen Telefonnummer als die Anrufertelefonnummer umfaßt, wenn die automatische Telefonnummer-Nummeridentifikation von dem Anrufer nicht akzeptiert wird.

3. Verfahren nach Anspruch 1, **dadurch gekennzeichnet, daß** das Verbinden mit einem Agenten zu einer Zeit veranlaßt wird, wenn der Agent verbunden worden wäre, falls der eingehende Anruf nicht getrennt worden wäre.

4. Anrufverarbeitungssystem (10) zum elektronischen Verarbeiten eines gehaltenen eingehenden Telefonanrufs von einem Anrufer, der eine Telefonnummer und einen Namen hat, wobei das System die folgenden Merkmale aufweist: eine zentrale Verarbeitungseinheit (12), wobei die zentrale Verarbeitungseinheit (12) mit einem DTMF-Decoder (20) verbunden ist, einen Sprachsynthesegenerator (22) und einen A/D-Wandler (24), welcher mittels eines Verteilers (18) mit Eingangstelefonleitungen (16) verbunden ist, wobei eine Anpassung ausgebildet ist, um Anruferinformationen mit Hilfe der folgenden Mittel zu bestimmen:
- Mittel zum Bestimmen der Anrufertelefonnummer;
- Mittel zum Anfordern des Anrufernamens von dem Anrufer und zum Aufzeichnen des Anrufernamens;
- Mittel zum Anfordern eines Hinweises auf "keinen Nebenanschluß", einen maschinenwählbaren Nebenanschluß oder einen verbalen Nebenanschluß, von dem Anrufer und zum Aufzeichnen des Hinweises und des maschinenwählbaren Nebenanschlusses oder des verbalen Nebenanschlusses, sofern diese vorhanden sind;
wobei die zentrale Verarbeitungseinheit (12) konfiguriert ist, um die Anruferinformation in eine Rückruf-Warteschlange einzugeben und den eingehenden Telefonanruf zu trennen;
wobei die zentrale Verarbeitungseinheit (12) auch mit einem DTMF-Codierer (26), einem Sprachsynthesegenerator (30) und einem D/A-Wandler (32) verbunden ist, welcher konfiguriert ist, um die Anruferinformation aus der Rückruf-Warteschlange zum Plazieren eines Rückrufs des Anrufers über einen Verteiler (28) zu nutzen, der mit Ausgangsleitungen (34) verbunden ist, mit Hilfe von:
- Mitteln zum Wählen der Anrufertelefonnummer und zum hörbaren Ansprechen des Anrufers mit dem Anrufemamen, wenn auf keinen Nebenanschluß hingewiesen wurde; oder
- Mitteln zum Wählen der Anrufertelefonnummer und des maschinenwählbaren Nebenanschlusses und zum hörbaren Ansprechen des Anrufers mit dem Anrufernamen, wenn auf einen maschinenwählbaren Nebenanschluß hingewiesen wurde; oder
- Mitteln zum Wählen der Anrufertelefonnummer und zum hörbaren Verlangen des verbalen Nebenanschlusses und zum hörbaren Ansprechen des Anrufers mit dem Anrufemamen, wenn auf einen verbalen Nebenanschluß hingewiesen wurde;
wobei die zentrale Verarbeitungseinheit (12) konfiguriert ist, um den Anrufer mit einem freien Agenten zu verbinden.

5. System nach Anspruch 4, **dadurch gekennzeichnet, daß** die zentrale Verarbeitungseinheit (12) konfiguriert ist, den Sprachsynthesegenerator (22) zu veranlassen, eine automatische Telefonnumrner-Nummeridentifikation mittels Sprache an den Anrufer zum Verifizieren zu übertragen und eine an den Anrufer gegebene Telefonnummer als die Anrufertelefonnummer aufzuzeichnen, wenn die automatische Telefonnummer-Nummeridentifikation von dem Anrufer nicht akzeptiert wird.

## Revendications

1. Procédé de traitement électronique d'un appel téléphonique d'arrivée bloqué passé par un appelant ayant un numéro de téléphone et un nom, ledit procédé comprenant les étapes consistant à :
déterminer les informations relatives à l'appelant, ladite étape de détermination des informations relatives à l'appelant comportant :
la détermination dudit numéro de téléphone de l'appelant;
l'interrogation de l'appelant sur ledit nom de l'appelant et l'enregistrement dudit nom de l'appelant ;
l'interrogation de l'appelant sur une indication « pas de poste », de poste pouvant être appelé par une machine, ou de poste verbal et l'enregistrement de ladite indication et dudit poste pouvant être appelé par une machine, ou dudit poste verbal, s'ils existent ;
l'entrée desdites informations relatives à l'appelant dans une file d'attente de rappel automatique ;
la déconnexion dudit appel téléphonique d'arrivée ;
ensuite, la composition d'un appel de rappel automatique vers ledit appelant, en utilisant lesdites informations relatives à l'appelant prises dans ladite file d'attente de rappel automatique, ladite étape d'utilisation desdites informations relatives à l'appelant comportant :
si aucun poste n'est indiqué, la numérotation dudit numéro de téléphone de l'appelant et le fait de s'adresser au dit appelant, de manière audible, par ledit nom de l'appelant ;
si un poste pouvant être appelé par une machine est indiqué, la numérotation dudit numéro de téléphone de l'appelant et du poste pouvant être appelé par une machine et le fait de s'adresser au dit appelant, de manière audible, par ledit nom de l'appelant ;
si un poste verbal est indiqué, la numérotation dudit numéro de téléphone de l'appelant, en demandant, de manière audible, ledit poste verbal et le fait de s'adresser au dit appelant, de manière audible, par ledit nom de l'appelant; et
la connexion d'un agent libre avec ledit appelant.

2. Procédé selon la revendication 1, dans lequel ladite étape consistant à déterminer les informations relatives à l'appelant comporte la transmission d'un numéro de téléphone d'identification de numéro automatique, par des paroles, au dit appelant, aux fins de vérification et si ledit numéro d'identification de numéro automatique n'est pas accepté par l'appelant, l'utilisation d'un numéro de téléphone fourni par l'appelant comme étant ledit numéro de téléphone de l'appelant.

3. Procédé selon la revendication 1 ou 2, dans lequel ladite connexion avec un agent est prévue pour se produire à un moment où ledit agent aurait été connecté si l'appel d'arrivée n'avait pas été déconnecté.

4. Système de traitement d'appel (10) pour le traitement électronique d'un appel téléphonique d'arrivée bloqué passé par un appelant ayant un numéro de téléphone et un nom, ledit système comprenant une unité centrale de traitement (12), l'unité centrale de traitement (12) étant associée à un décodeur DTMF (multifréquence à deux tonalités) (20), un synthétiseur de parole (22) et un convertisseur A/N (24) connecté grâce à un commutateur (18) aux lignes téléphoniques entrantes (16) conçu pour déterminer les informations relatives à l'appelant grâce à :
des moyens permettant de déterminer ledit numéro de téléphone de l'appelant ;
des moyens permettant d'interroger l'appelant sur ledit nom de l'appelant et d'enregistrer ledit nom de l'appelant ;
des moyens permettant d'interroger l'appelant sur une indication « pas de poste », de poste pouvant être appelé par une machine, ou de poste verbal et d'enregistrer ladite indication et ledit poste pouvant être appelé par une machine, ou ledit poste verbal, s'ils existent ;
ladite unité centrale de traitement (12) étant configurée pour entrer lesdites informations relatives à l'appelant dans une file d'attente de rappel automatique et pour déconnecter ledit appel téléphonique d'arrivée ;
l'unité centrale de traitement (12) étant également associée à un décodeur DTMF (multifréquence à deux tonalités) (26), un synthétiseur de parole (30) et un convertisseur A/N (32) configurés pour utiliser lesdites informations relatives à l'appelant dans ladite file d'attente de rappel automatique pour composer un rappel automatique vers ledit appelant grâce à un commutateur (28) connecté aux lignes de départ (34), grâce à, soit :
des moyens permettant la numérotation dudit numéro de téléphone de l'appelant et de s'adresser, de manière audible, au dit appelant par ledit nom de l'appelant, si « aucun poste » est indiqué, soit
des moyens permettant la numérotation dudit numéro de téléphone de l'appelant et du poste pouvant être appelé par une machine, et de s'adresser, de manière audible, au dit appelant par ledit nom de l'appelant, si un poste pouvant être appelé par une machine est indiqué, soit
des moyens permettant la numérotation dudit numéro de téléphone de l'appelant et de s'adresser, de manière audible, au dit appelant par ledit nom de l'appelant, si un poste verbal est indiqué,
ladite unité centrale de traitement (12) étant également configurée pour connecter un agent libre avec l'appelant.

5. Système selon la revendication 4, dans lequel l'unité centrale de traitement (12) est configurée pour que le synthétiseur de parole (22) transmette un numéro de téléphone d'identification de numéro automatique, par des paroles, au dit appelant, aux fins de vérification et, si ledit numéro d'identification de numéro automatique n'est pas accepté par l'appelant, pour enregistrer un numéro de téléphone fourni par l'appelant comme étant ledit numéro de téléphone de l'appelant,
